# EUROPÄISCHE PATENTSCHRIFT

(11) **EP 0 396 044 B1**
(45) Veröffentlichungstag und Bekanntmachung des Hinweises auf die Patenterteilung: **05.10.1994**
(21) Anmeldenummer: 90108081.2
(22) Anmeldetag: 27.04.1990
(51) Int. Cl.: B01D 19/04

(54) **Mischung aus Alkylglucosiden und Alkoholen als Entschäumer**
Mixture of alkylglucosides and alcohols as defoaming agent
Mélange d'alkylglucosides et d'alcools come anti-mousse

(30) Priorität: 05.05.1989 DE 3914906
(43) Veröffentlichungstag der Anmeldung: 07.11.1990
(73) Patentinhaber: Henkel Kommanditgesellschaft auf Aktien, 40191 Düsseldorf (DE)
(72) Erfinder: Hill, Karlheinz, Dr., D-4006 Erkrath (DE); Asbeck, Adolf, D-4000 Düsseldorf 13 (DE); Schmid, Karl-Heinz, Dr., D-4020 Mettman (DE)

(56) Entgegenhaltungen:
- EP-A- 0 096 917
- EP-A- 0 148 087
- EP-A- 0 180 664
- EP-A- 0 230 977
- DE-A- 1 769 643
- DE-A- 2 157 033
- DE-A- 2 209 559
- DE-B- 1 418 677
- DE-B- 2 164 907
- US-A- 3 547 828
- J. FALBE: "SURFACTANTS IN CONSUMER PRODUCTS"
- PATENT ABSTRACTS OF JAPAN

## Beschreibung

Die Erfindung betrifft ein Erzeugnis auf der Basis einer Mischung von Alkylglucosiden und aliphatischen Alkoholen, das als Entschäumer insbesondere in der Nahrungsmittelindustrie verwendet werden kann.

Der Schaumbekämpfung kommt in der Nahrungsmittelindustrie, z. B. bei der Zuckergewinnung, bei Fermentationsprozessen bzw. der Hefegewinnung, beträchtliche Bedeutung zu. Durch Zusatz von geeigneten Hilfsmitteln muß die Schaumbildung auf ein das technische Produktionsverfahren nicht beeinträchtigendes Maß herabgesetzt werden.

Verantwortlich für die störenden und üblicherweise beständigen Schäume sind gewisse grenzflächenaktive Stoffe, z. B. Huminsäuren, Eiweißsubstanzen, Abbauprodukte von Eiweiß und Stärke, Pektine und Saponine, wie sie in der Natur zahlreich vorkommen.

Durch die Bildung unerwünschter Schäume kann die Produktion in den Produktionsanlagen stark behindert werden, etwa weil die Kapazität der Anlage nicht ausgenutzt werden kann oder durch die Schaumbildung erhebliche Verluste an eingesetztem Rohstoff auftreten können. Besondere Schwierigkeiten durch übermäßige Schaumentwicklung können in einer Zuckerfabrik in den Klärvorrichtungen sowie in den Carbonisiertanks und in den Verdampfern auftreten.

Die zur Schaumregulierung einzusetzenden Hilfsmittel müssen bei der üblichen Aufarbeitung des Endproduktes, etwa bei der Raffination des Zuckers, weitgehend entfernt werden, so daß sie das fertige Erzeugnis nicht mehr belasten. Darüber hinaus müssen alle Hilfsmittel, die bei der Herstellung von Nahrungsmitteln verwendet werden, geruch- und geschmacklos und selbstverständlich physiologisch völlig unbedenklich sein.

Ebenso sollen Schaumbekämpfungsmittel, die nach ihrer Verwendung ins Abwasser gelangen, biologisch vollkommen abgebaut werden können.

Aus wirtschaftlichen Gründen und um die Mengen an Zusatzstoffen in Nahrungsmitteln möglichst gering zu halten, sind besonders hochwirksame Entschäumer erwünscht. Darunter werden Entschäumer verstanden, die sich dadurch auszeichnen, daß ihre Wirkung ohne Verzögerung, also spontan eintritt, ein hoher Grad der Entschäumung erreicht wird und die Wirkung dieser Mittel über einen möglichst langen Zeitraum hinweg anhält.

Zum Zwecke der Entschäumung sind für die Nahrungsmittelindustrie u. a. Fettsäuremonoglyceride, Fettsäurepolyglykolester, Polyalkylenglykole, Alkylenoxidaddukte an Alkylphosphorsäuren, verzweigte Fettalkoholoxalkylate und Oligosaccharidoxalkylate sowie natürliche Fette und Öle vorgeschlagen worden, die zwar biologisch rasch und vollständig abbaubar sind, aber sowohl eine ungenügende spontane Entschäumungswirkung als auch eine nicht genügend lang anhaltende Wirkung besitzen.

Die Erfindung geht von der Aufgabe aus, Schauminhibitoren für die Herstellung bzw. Verarbeitung von Nahrungsmitteln zu finden, die bei völliger physiologischer Unbedenklichkeit bereits in sehr geringen Zusatzmengen eine ausgezeichnete spontane Entschäumung bewirken sowie diese Wirksamkeit über lange Zeiträume beibehalten. Gleichzeitig soll der rasche, biologisch vollständige Abbau ohne Bildung von Metaboliten in der Kläranlage sichergestellt sein.

Es ist bekannt, daß Alkylglucoside gut abbaubar und nicht toxisch sind. Ebenso ist aber auch bekannt, daß Alkylglucoside mit Alkylketten im Bereich von C₁₂ bis C₁₄ zu den Starkschäumern gehören.

Die Herstellung von Alkylglucosiden erfolgt vorzugsweise nach zwei Methoden: Nach der Methode der Direktsynthese wird Glucose, mit einem Überschuß an Fettalkohol und mit einer Säure als Katalysator direkt zum Glucosid umgesetzt, während nach der Methode der Umacetalisierung unter Mitverwendung eines niederen Alkohols oder Glykols als Lösungsmittel und Reaktionspartner zunächst ein Niedrigalkylglucosid entsteht, das im nachfolgenden Schritt mit Fettalkohol zum Endprodukt reagiert.

So wird beispielsweise in der US-A-3 547 828 die Herstellung eines ternären Gemisches aus Alkyloligoglucosiden, Alkylmonoglucosiden und den entsprechenden freien C₁₁-C₃₂ Alkanolen nach dem Umacetalisierungsverfahren mit Butanol beschrieben. Um bei der Verwendung langkettiger Alkanole Produkte mit erniedrigter Viskosität herzustellen, wird die Umacetalisierungsreaktion gegebenenfalls vorzeitig abgebrochen, so daß noch Teile des Butylglucosids im Reaktionsgemisch verbleiben. Nach üblicher Aufarbeitung wird der im Überschuß eingesetzte höhere Fettalkohol zum größten Teil, meist auf Werte von weniger als 2 Gew.-%, im Vakuum entfernt.

Hingegen beschreibt die EP-A-0 096 917 ein verbessertes Verfahren zur säurekatalysierten Direktsynthese mit C₈-C₂₅-Fettalkoholen, wobei ein Monosaccharid, vorzugsweise Glucose, derart hinzugefügt wird, daß nie mehr als 10 % nicht umgesetztes Monosaccharid im Reaktionsgemisch vorhanden sind.

Nach üblicher Aufarbeitung, einschließlich Abtrennung des überschüssigen Fettalkohols mittels eines Dünnschichtverdampfers, liefert das Verfahren ein Produkt, das 20 bis 70 Gew.-% Alkylmonoglucosid, weniger als 10 % Mono- und Polysaccharide, weniger als 2 Gew.-% freien Fettalkohol und im übrigen Alkylpolyglucoside enthält.

Es wurde nun gefunden, daß bestimmte Erzeugnisse, die Alkylglucoside enthalten, eine interessante entschäumende Wirkung zeigen.

Gegenstand der Erfindung ist dementsprechend eine Mischung aus (A) einem Alkylglucosid der allgemeinen Formel R-O-(G)ₙ, (B) einem primären, monofunktionellen Alkohol der Formel ROH und (C) einem nicht mit Wasser mischbaren Trägeröl, wobei sich R von einer geradkettigen oder verzweigten Alkylkette mit im wesentlichen 16 bis 28 Kohlenstoffatomen ableitet, G eine Glucose-Einheit darstellt, n Werte zwischen 1 und 10 annimmt und das Gewichtsverhältnis von (A) zu (B) zwischen 20 : 1 und 1 : 9 liegt.

Ein weiterer Gegenstand der Erfindung ist die Verwendung einer Mischung aus (A) einem Alkylglucosid der Formel R-O-(G)ₙ und (B) einem primären, monofunktionellen Alkohol der Formel ROH, wobei sich R von einer geradkettigen oder verzweigten Alkylkette mit im wesentlichen 16 bis 28 Kohlenstoffatomen ableitet, G eine Glucose-Einheit darstellt, n Werte zwischen 1 und 10 annimmt und das Gewichtsverhältnis (A) : (B) zwischen 20 : 1 und 1 : 9 liegt, als Entschäumer, insbesondere in der Nahrungsmittelindustrie.

Der Alkylrest R, der sich von den primären und monofunktionellen Alkoholen (B) ableitet, beinhaltet sowohl in den Alkoholen (B) als auch in den Alkylglucosiden (A) eine geradkettige oder verzweigte Alkylkette mit im wesentlichen 16 bis 28 Kohlenstoffatomen, d.h. es handelt sich um gesättigte aliphatische Reste in technischer Reinheit. Vorzugsweise leiten sich die Alkylreste R von Fettalkoholen mit 16 bis 22 Kohlenstoffatomen ab. Typische Vertreter der eingesetzten Alkohole sind Hexadecanol, Octadecanol, Behenylalkohol (Docosanol) und Guerbet-Alkohole wie 2-Octyldodecan-1-ol.

Da die Fettalkohole bevorzugt aus natürlichen Fettquellen stammen, kommen auch Gemische technischer Fettalkohole in Betracht. Der Alkylrest R umfaßt demnach auch Reste, die sich aus mehreren Kohlenstoffketten mit unterschiedlicher Länge zusammensetzen. Durch die Verwendung technischer Schnitte kann der Alkylrest R in kleinen Mengen auch Anteile von Alkylketten mit 14 C-Atomen, gegebenenfalls sogar mit 12 C-Atomen enthalten. Ihr Anteil in den erfindungsgemäßen Mischungen entspricht jedoch maximal ihrem Anteil in der natürlichen Zusammensetzung der eingesetzten technischen Fettalkohole. Jedenfalls ist der C₁₂/C₁₄-Alkyl-Anteil als nicht wesentlich anzusehen, solange er so gering ist, daß er die Entschäumung der C₁₆-C₁₈-Alkylreste nicht beeinträchtigt.

Besonders bevorzugt ist der Einsatz von Talgalkohol und Behenylalkohol.

Die erfindungsgemäß eingesetzten Alkylglucoside (A) weisen einen Oligomerisierungsgrad n zwischen 1 und 10 auf. Ihre Herstellung kann in an sich bekannter Weise erfolgen. Vorzugsweise aber wird feinverteilte Glucose oder ein Zucker, der aus Glucose-Einheiten aufgebaut ist, direkt mit einem Überschuß an Alkohol (B) unter Verwendung eines sauren Katalysators, wie z.B. Schwefelsäure oder vorzugsweise Paratoluolsulfonsäure, und bei gleichzeitiger destillativer Abtrennung des entstehenden Wassers bei reduziertem Druck (10 - 25 mbar) umgesetzt. Das sauer anfallende Reaktionsprodukt wird anschließend neutralisiert. Hierfür sind organische oder anorganische basische Alkali-, Erdalkali- oder Aluminium- bzw. Alkali/Aluminiumverbindungen geeignet. Zweckmäßigerweise werden dabei pH-Werte von wenigstens 8, vorzugsweise von etwa 9 eingestellt. Zur Neutralisation des Katalysators sind insbesondere Magnesiumverbindungen, beispielsweise Organomagnesiumverbindungen wie Magnesiumalkoholate oder anorganische Magnesiumverbindungen wie Magnesiumoxid bzw. Magnesiumhydroxid geeignet. Ein brauchbares Neutralisationsmittel ist aber auch Zeolith NaA, insbesondere in Abmischung mit Calciumhydroxid.

Falls eine Abdestillation des Alkoholüberschusses erforderlich ist, kann sie bis zur Einstellung des gewünschten Gewichtsverhältnisses (A) : (B) in bekannten produktschonenden Vakuumdestillationsvorrichtungen erfolgen. Geeignet ist hier insbesondere der Einsatz von Dünnschicht- und/oder Fallfilmverdampfern.

Die erfindungsgemäßen Alkylglucosid-Alkohol-Trägeröl-Mischungen besitzen ein Gewichtsverhältnis (A) : (B) von 20 : 1 bis 1 : 9, vorzugsweise 19 : 1 bis 1 : 5. Von besonderer Bedeutung sind Mischungen, in denen R einen Talgalkyl- oder Behenyl-Rest darstellt und das Mischungsverhältnis (A) : (B) zwischen 6 : 1 und 1 : 5 liegt.

Die erfindungsgemäß als Entschäumer zu verwendenden Produkte (A+B) wirken bereits in sehr kleinen Mengen. Sie werden im allgemeinen in Mengen deutlich unterhalb 1 Gew.-%, bezogen auf das zu entschäumende Gut, eingesetzt. Dabei löst bereits der Zusatz von Spuren, etwa im Bereich von 10 - 500 ppm, eine spontan eintretende und lang (mindestens 30 Minuten) anhaltende Entschäumungswirkung aus. Die Produkte (A+B) beziehungsweise (A+B+C) werden in solchen Mengen verwendet, daß die Menge an (A+B) von 0,0012 bis 0,05 Gew.-%, vorzugsweise von 0,0015 bis 0,02 Gew.-% und insbesondere von 0,0015 bis 0,015 Gew.-%, bezogen auf das zu entschäumende Gut, beträgt.

Als Trägeröl (C), das selber nicht als Entschäumer wirkt und chemisch inert ist, eignet sich beispielsweise Paraffinöl, Mineralöl und Oxoöl. Unter Paraffinöl versteht der Fachmann ein flüssiges Gemisch aus gereinigten, gesättigten aliphatischen Kohlenwasserstoffen, während in Mineralöl neben aliphatischen Kohlenwasserstoffen auch aromatische Kohlenwasserstoffe enthalten sind. Oxoöl wird der bei der Oxo-Alkoholherstellung (nach der Methode der Oxo-Synthese bzw. Hydroformulierung) nach der Destillation der Alkohole erhaltene Rückstand genannt. Vorzugsweise wird als Trägeröl (C) Paraffinöl verwendet.

Entschäumermischungen, die 80 bis 97 Gew.-% des Trägeröls (C) und 3 bis 20 Gew.-% der Alkylglucosid-Alkohol-Mischung (A+B) enthalten, sind dabei bevorzugt. Eine besonders hohe Wirksamkeit weisen Entschäumermischungen auf, die
(A) 0,8 bis 12,9 Gew.-% des Alkylglucosids R-O-(G)ₙ,
(B) 0,7 bis 12,5 Gew.-% des primären, monofunktionellen Alkohols ROH und
(C) 85 bis 95 Gew.-% des Trägeröls enthalten,
wobei R einen Talgalkyl- oder Behenyl-Rest darstellt und als Trägeröl Paraffinöl verwendet wird.

### Beispiele

### Beispiel 1

### Herstellung von Behenylglucosid

Ein Gemisch aus 1264 g (4 Mol) Behenylalkohol (Docosanol) und 180 g (1 Mol) wasserfreier Glucose wurden unter Rühren auf 110 bis 115 °C aufgeheizt, mit 1,2 g Paratoluolsulfonsäure versetzt und bei einem Vakuum von 20 mbar 4 Stunden gerührt, wobei das bei der Reaktion entstehende Wasser destillativ entfernt wurde. Nach Abkühlen der Lösung auf 90 °C und Belüften mit Stickstoff wurden bei Normaldruck 2,5 g Magnesiumethylat zugegeben und 30 Minuten nachgerührt. Dabei stellte sich ein pH-Wert von ca. 9 ein (gemessen als 10 %ige Lösung in Wasser/Ethanol). Das Reaktionsgemisch wurde über einen Filter mit einer Porenweite von 250 µm filtriert (ca. 2 g Rückstand) und nach Abkühlen auf Raumtemperatur zu einem feinen Pulver gemahlen.

Produktkenndaten: OH-Zahl 276; Säurezahl 1,1: Behenylalkohol 82 Gew.-%; Behenylglucosid 18 Gew.-%.

Zur Herstellung von Behenylglucosid-Behenylalkohol-Mischungen mit einem geringeren Fettalkoholgehalt wurde Behenylalkohol nach der Filtration der Reaktionslösung im Vakuum (0,05 - 0,01 mbar) bis zum gewünschten Restanteil abdestilliert. Dabei wurden im Verlauf von 4,5 Stunden bis zu 1166 g Behenylalkohol zurückgewonnen, wobei die Sumpftemperatur auf maximal 210 °C erhöht wurde. Der Destillationsrückstand (259 g) wurde nach Abkühlen auf Raumtemperatur zu einem feinen Pulver gemahlen.

Produktkenndaten: OH-Zahl 694; Säurezahl O; restlicher Behenylalkohol (GC-Analyse) 5 Gew.-%

### Beispiel 2

### Entschäumerprüfung an Rübensirup

In einem 2-Liter-Meßzylinder wurden 110 g Zuckersirup mit 420 ml Wasser (17 °d) gemischt. Das Gesamtvolumen betrug 500 ml. Mit Hilfe einer Pumpe wurde die Lösung vom Boden des Meßzylinders angesaugt. Die Rückführung der Flüssigkeit erfolgte über ein Rohr, dessen Ausflußöffnung in Höhe der Oberkante des Meßzylinders lag. Die derart im Kreis geführte Flüssigkeit fiel im freien Fall aus ca. 30 cm Höhe in den Meßzylinder zurück. Die Temperatur wurde mittels eines Thermostaten auf 25 °C eingestellt.
Die Förderleistung der Pumpe wurde so einreguliert, daß sich eine konstante, dynamische Schaumhöhe von 1800 - 2000 ml einstellte. Als Meßwert für die Schaumhöhe gilt das Gesamtvolumen aus Flüssigkeit (500 ml) und Schaumvolumen (1500 ml).

Pro Versuch wurden 0,1 ml einer Mischung aus 10 Gew.-% eines der erfindungsgemäßen Produkte I, II und III und 90 Gew.-% Paraffinöl (White Oil Pharmaceutical 40, Markenname der Deutschen Texaco AG) mit einer Mikropipette zugesetzt, wobei
I 95 Gew.-% Hexadecylglucosid + 5 Gew.-% Hexadecanol,
II 85 Gew.-% Talgalkoholglucosid + 15 Gew.-% Talgalkohol und
III 18 Gew.-% Behenylglucosid + 82 Gew.-% Behenylalkohol
beinhaltete. Die Schaumhöhe wurde jeweils nach 0,5, 1, 2, 3, 5, 10, 20 und 30 Minuten gemessen.

Das verwendete Paraffinöl besaß allein eingesetzt, d.h. ohne den Zusatz der erfindungsgemäßen Produkte, keine signifikante schauminhibierende Wirkung.

In Vergleichsversuchen wurden 10 Gew.-%ige Mischungen von Behenylalkohol IV bzw. von einem bekannten Schauminhibitor V in Paraffinöl getestet, wobei
- V: aus ethoxyliertem und propoxyliertem Oxoöl mit 15 Gew.-% Ethylenoxid (EO) und 40 Gew.-% Propylenoxid (PO) (Dehysan K 7204, Markenname der Fa. Henkel KGaA)
bestand.

**Tabelle 1**

| Substanz | Blindwert | Schaumhöhe in ml | | | | | | | |
|---|---|---|---|---|---|---|---|---|---|
| | | Zeit in Minuten nach 0,1 ml Entschäumerzugaben | | | | | | | |
| | | 0,5 | 1 | 2 | 3 | 5 | 10 | 20 | 30 |
| III | 2000 | 600 | 560 | 560 | 560 | 640 | 680 | 780 | 880 |
| IV | 2000 | 1100 | 720 | 640 | 620 | 680 | 780 | 840 | 960 |

Wie aus Tabelle 1 zu ersehen ist, führten bereits Mischungen wie III mit einem geringen Anteil an Glucosiden zu einer signifikant besseren Entschäumung als reiner Fettalkohol IV.

Die erfindungsgemäßen Produkte I, II und III wiesen im Vergleich mit V nicht nur kleinere (Produkte II und III) bzw. vergleichbare Schaumhöhen (Produkt I) auf, sondern zeigten auch eine spontan einsetzende Wirkung. So wurde die von einem Produkt maximal erreichbare Entschäumung für III bereits nach einer Minute, für I und II nach 2 Minuten erreicht. Hingegen stellte sich die niedrigste Schaumhöhe für die Vergleichssubstanz V erst nach 10 Minuten ein.

## Patentansprüche

1. Mischung aus (A) einem Alkylglucosid der Formel R-O-(G)ₙ, (B) einem primären, monofunktionellen Alkohol der Formel ROH, und (C) einem nicht mit Wasser mischbaren Trägeröl, wobei sich R von einer geradkettigen oder verzweigten Alkylkette mit im wesentlichen 16 bis 28 Kohlenstoffatomen ableitet, G eine Glucose-Einheit darstellt, n Werte zwischen 1 und 10 annimmt und das Gewichtsverhältnis (A) : (B) zwischen 20 : 1 und 1 : 9 liegt.

2. Erzeugnis nach Anspruch 1, dadurch gekennzeichnet, daß R einen Talgalkyl- oder Behenyl-Rest darstellt und das Gewichtsverhältnis (A) : (B) zwischen 6 : 1 und 1 : 5 liegt.

3. Erzeugnis nach Anspruch 1 oder 2, dadurch gekennzeichnet, daß das Trägeröl (C) aus Paraffinöl, Mineralöl oder Oxoöl, vorzugsweise aus Paraffinöl besteht.

4. Erzeugnis nach einem oder mehreren der Ansprüche 1 bis 3, dadurch gekennzeichnet, daß es 3 bis 20 Gew.-% der Alkylglucosid-Alkohol-Mischung (A+B) und 80 bis 97 Gew.-% des Trägeröls (C) enthält.

5. Erzeugnis nach einem oder mehreren der Ansprüche 1 bis 4, dadurch gekennzeichnet, daß es
(A) 0,8 bis 12,9 Gew.-% des Alkylglucosid R-O-(G)ₙ,
(B) 0,7 bis 12,5 Gew.-% des primären, monofunktionellen Alkohols ROH und
(C) 85 bis 95 Gew.-% des Trägeröls enthält,
wobei G und n wie in Anspruch 1 definiert sind, R einen Talgalkyl- oder Behenyl-Rest darstellt und das Trägeröl Paraffinöl ist.

6. Verwendung einer Mischung aus (A) einem Alkylglucosid der Formel R-O-(G)ₙ und (B) einem primären, monofunktionellen Alkohol der Formel ROH, wobei sich R von einer geradkettigen oder verzweigten Alkylkette mit im wesentlichen 16 bis 28 Kohlenstoffatomen ableitet, G eine Glucose-Einheit darstellt, n Werte zwischen 1 und 10 annimmt und das Gewichtsverhältnis (A) : (B) zwischen 20 : 1 und 1 : 9 liegt, als Entschäumer, insbesondere in der Nahrungsmittelindustrie.

7. Verwendung eines Erzeugnisses nach einem oder mehreren der Ansprüche 1 bis 5 als Entschäumer, insbesondere in der Nahrungsmittelindustrie, dadurch gekennzeichnet, daß die Alkylglucosid-Alkohol-Mischung (A+B) in Mengen von 0,0012 bis 0,05 Gew.-%, vorzugsweise in Mengen von 0,0015 bis 0,02 Gew.-% und insbesondere in Mengen von 0,0015 bis 0,015 Gew.-%, bezogen auf das zu entschäumende Gut, eingesetzt wird.

## Claims

1. A mixture of (A) an alkyl glucoside corresponding to the formula R-O-(G)ₙ, (B) a primary monofunctional alcohol corresponding to the formula ROH and (C) a water-immiscible carrier oil, R being derived from a linear or branched alkyl chain essentially containing 16 to 28 carbon atoms, G being a glucose unit, n assuming values of 1 to 10 and the ratio by weight of (A) to (B) being from 20:1 to 1:9.

2. A product as claimed in claim 1, characterized in that R is a tallow alkyl or behenyl radical and the ratio by weight of (A) to (B) is from 6:1 to 1:5.

3. A product as claimed in claim 1 or 2, characterized in that the carrier oil (C) consists of paraffin oil, mineral oil or oxo oil, preferably paraffin oil.

4. A product as claimed in one or more of claims 1 to 3, characterized in that it contains 3 to 20% by weight of the alkyl glucoside/alcohol mixture (A+B) and 80 to 97% by weight of the carrier oil (C).

5. A product as claimed in one or more of claims 1 to 4, characterized in that it contains
(A) 0.8 to 12.9% by weight of the alkyl glucoside R-O-(G)ₙ,
(B) 0.7 to 12.5% by weight of the primary monofunctional alcohol ROH and
(C) 85 to 95 % by weight of the carrier oil,
G and n being as defined in claim 1, R being a tallow alkyl or behenyl group and the carrier oil being paraffin oil.

6. The use of a mixture of (A) an alkyl glucoside corresponding to the formula R-O-(G)ₙ and (B) a primary monofunctional alcohol corresponding to the formula ROH, R being derived from a linear or branched alkyl chain essentially containing 16 to 28 carbon atoms, G being a glucose unit, n assuming values of 1 to 10 and the ratio by weight of (A) to (B) being from 20:1 to 1:9,
as a foam inhibitor, more particularly in the food industry.

7. The use of the product claimed in one or more of claims 1 to 5 as a foam inhibitor, more particularly in the food industry, characterized in that the alkyl glucoside/alcohol mixture (A+B) is used in quantities of 0.0012 to 0.05% by weight, preferably in quantities of 0.0015 to 0.02% by weight and, more preferably, in quantities of 0.0015 to 0.015% by weight, based on the material to be foam-inhibited.

## Revendications

1. Mélange comprenant :
A) un alcoylglucoside de formule R - O (G)n
B) un alcool monofonctionnel primaire de formule ROH
C) une huile de support non miscible à l'eau
dans lequel
R dérive d'une chaîne alcoyle linéaire ou ramifiée, ayant essentiellement de 16 à 28 atomes de carbone
G représente une unité de glucose
n adopte des valeurs entre 1 et 10
et le rapport pondéral (A) : (B) se situe entre 20 : 1 et 1 : 9.

2. Produit selon la revendication 1, caractérisé en ce que R représente un radical suifalcoyle ou béhényle et le rapport pondéral (A) : (B) se situe entre 6 : 1 et 1 : 5.

3. Produit selon la revendication 1 ou la revendication 2, caractérisé en ce que l'huile de support (C) consiste en huile de paraffine, huile minérale, ou oxo huile, de préférence en huile de paraffine.

4. Produit selon l'une ou plusieurs des revendications 1 à 3, caractérisé en ce qu'il contient de 3 à 20% en poids de mélange alcoylglucoside - alcool (A+B) et de 80 à 97% en poids d'huile de support (C).

5. Produit selon l'une ou plusieurs des revendications 1 à 4, caractérisé en ce qu'il renferme :
A) de 0,8 à 12,9% en poids d'alcoylglucoside R -O -(G)n
B) de 0,7 à 12,5% en poids d'alcool mono - fonctionnel primaire ROH et
C) de 85 à 95% en poids d'huile de support
dans lequel G et n sont définis comme à la revendication 1, R représente un radical suif alcoyle ou béhényle et l'huile de support est l'huile de paraffine.

6. Utilisation d'un mélange à base de (A) un alcoylglucoside de formule R - O -(G)n et de (B) un alcool monofonctionnel primaire de formule ROH dans lequel :
R dérive d'une chaîne alcoyle linéaire ou ramifiée ayant essentiellement de 16 à 28 atomes de carbone,
G représente une unité de glucose
n adopte des valeurs entre 1 et 10
et le rapport pondéral (A) : (B) se situe entre 20 : 1 et 1 : 9,
en tant qu'agent anti-mousse en particulier dans l'industrie alimentaire.

7. Utilisation d'un produit selon l'une ou plusieurs des revendications 1 à 5, en tant qu'agent anti-mousse, en particulier dans l'industrie alimentaire, caractérisée en ce que le mélange alcoylglucoside - alcool (A + B) est mis en oeuvre en quantités allant de 0,0012 à 0,05% en poids, de préférence en quantité allant de 0,0015 à 0,02% en poids et en particulier en quantités allant de 0,0015 à 0,015% en poids, rapportées au produit qui sert à combattre la mousse.
